(19) **Europäisches Patentamt / European Patent Office / Office européen des brevets**

(11) **EP 2 430 207 B2**

(12) **NOUVEAU FASCICULE DE BREVET EUROPEEN**
Après la procédure d'opposition

(45) Date de publication et mention de la décision concernant l'opposition:
**22.01.2025 Bulletin 2025/04**

(45) Mention de la délivrance du brevet:
**11.01.2017 Bulletin 2017/02**

(21) Numéro de dépôt: 10723639.0

(22) Date de dépôt: **07.05.2010**

(51) Classification Internationale des Brevets (IPC):
**C23C 2/20** (2006.01)

(52) Classification Coopérative des Brevets (CPC):
**C23C 2/06; B32B 15/01; B32B 15/012; B32B 15/013; C22C 18/00; C22C 18/04; C23C 2/022; C23C 2/20; C23C 2/26**

(86) Numéro de dépôt international:
**PCT/FR2010/000357**

(87) Numéro de publication internationale:
**WO 2010/130890 (18.11.2010 Gazette 2010/46)**

(54) **PIÈCE MÉTALLIQUE REVÊTUE PRÉSENTANT UN ASPECT AMÉLIORÉ**

BESCHICHTETES METALLTEIL MIT VERBESSERTEM AUSSEHEN

COATED METAL PART HAVING AN IMPROVED APPEARANCE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **14.05.2009 PCT/FR2009/000561**

(43) Date de publication de la demande:
**21.03.2012 Bulletin 2012/12**

(73) Titulaire: **ArcelorMittal**
**1160 Luxembourg (LU)**

(72) Inventeurs:
• **DIEZ, Luc**
  **F-57000 Metz (FR)**
• **MATAIGNE, Jean-Michel**
  **F-60300 Senlis (FR)**
• **ORSAL, Bertrand**
  **F-60500 Vineuil Saint Firmin (FR)**
• **SAINT RAYMOND, Hubert**
  **F-57000 Metz (FR)**

(74) Mandataire: **Lavoix**
**2, place d'Estienne d'Orves**
**75441 Paris Cedex 09 (FR)**

(56) Documents cités:
EP-A1- 0 038 904     EP-A1- 0 122 856
EP-A2- 0 905 270     WO-A1-2010/038472
JP-A- 2002 348 651   US-A- 4 557 952
US-A- 4 557 953

EP 2 430 207 B2

**Description**

L'invention concerne une pièce métallique obtenue par déformation d'une bande métallique présentant un aspect amélioré, plus particulièrement une pièce de peau pour véhicules terrestres à moteur, sans toutefois y être limitée.

Les tôles en acier destinées à la fabrication de pièces pour véhicule terrestre à moteur sont généralement revêtues d'une couche métallique de protection contre la corrosion, à base de zinc, déposée soit par trempé à chaud dans un bain liquide à base de zinc, soit par électrodéposition dans un bain électrolytique comprenant des ions du zinc.

Les tôles galvanisées destinées à la fabrication de pièces de peau, sont ensuite mises en forme et assemblées pour former une caisse en blanc, qui est ensuite revêtue par au moins une couche de peinture, laquelle assure une protection accrue contre la corrosion ainsi qu'un bon aspect de surface.

A cet effet, conventionnellement, les constructeurs automobiles appliquent d'abord sur la caisse en blanc une couche de cataphorèse, puis une couche de peinture d'apprêt, une couche de peinture de base, et éventuellement une couche de vernis. Pour obtenir un aspect de surface peint satisfaisant, il est généralement appliqué une épaisseur totale de peinture comprise entre 90 et 120 $\mu$m, constituée d'une couche de cataphorèse de 20 à 30 $\mu$m d'épaisseur, d'une couche de peinture d'apprêt de 40 à 50 $\mu$m et une couche de peinture de base de 30 à 40 $\mu$m par exemple.

Afin de limiter l'épaisseur des systèmes de peinture à une valeur inférieure à 90 $\mu$m, certains constructeurs automobiles ont proposé soit d'éviter l'étape de cataphorèse, soit encore de limiter le nombre de couches de peinture pour augmenter la productivité. Cependant, à ce jour, cette réduction d'épaisseur du système peinture s'effectue toujours au détriment de l'aspect de surface peint final de la pièce et n'est pas mise en oeuvre industriellement.

En effet, les revêtements à base de zinc servant de substrat de base présentent ce qu'on appelle une ondulation de leur surface, qui ne peut actuellement être compensée que par des couches importantes de peinture sous peine d'avoir un aspect dit de « peau d'orange » inacceptable pour des pièces de carrosserie.

L'ondulation W (waviness en anglais) de la surface est une irrégularité géométrique douce, pseudopériodique; d'assez grande longueur d'onde (0,8 à 10 mm) que l'on distingue de la rugosité R qui correspond aux irrégularités géométriques de faibles longueurs d'ondes(< 0,8mm).

Dans la présente invention, la moyenne arithmétique Wa du profil d'ondulation, exprimée en $\mu$m, a été retenue pour caractériser l'ondulation de la surface de la tôle, et les mesures d'ondulation ont été réalisées avec un seuil de coupure de 0,8 mm et désignées par $Wa_{0,8}$.

Le but de l'invention est donc de mettre à disposition un procédé de fabrication d'une bande métallique revêtue d'un revêtement anticorrosion, dont l'ondulation $Wa_{0,8}$ soit réduite par rapport aux bandes de l'art antérieur, permettant ainsi de fabriquer des pièces métalliques peintes nécessitant une épaisseur totale de peinture réduite par rapport aux pièces de l'art antérieur.

A cet effet, l'objet de l'invention est une pièce métallique selon la revendication 1 ou 2.

Dans des modes de réalisations préférés, le procédé pour l'obtention de la pièce métallique selon l'invention peut en outre comprendre les caractéristiques suivantes, prises seules ou en combinaison :

- les caissons de confinement présentent une hauteur d'au moins 15 cm, voire 20 cm et de façon plus particulièrement préférée d'au moins 30 cm par rapport à la ligne d'essorage ;
- les caissons de confinement sont alimentés en gaz présentant un pouvoir oxydant inférieur à celui d'une atmosphère constituée de 4% en volume d'oxygène et 96% en volume d'azote, et de préférence supérieur à celui d'une atmosphère constituée de 0,15% en volume d'oxygène et 99,85% en volume d'azote ;
- on fait en outre passer la bande dans une zone de confinement située avant la ligne d'essorage,
- la zone de confinement situe avant l'essorage commence à la sortie du bain de métal en fusion et finit sous la ligne d'essorage ;
- le gaz d'essorage est constitué d'azote ;
- la bande métallique est une bande d'acier.

La bande métallique laminée à froid et revêtue par trempé à chaud mais non skin-passée peut être obtenue par le procédé ci-dessus et son revêtement métallique présente une ondulation $Wa_{0,8}$ inférieure ou égale à 0,70 $\mu$m, de préférence inférieure ou égale à 0,65 $\mu$m et comprend de 0,2 à 8% en poids d'aluminium et du magnésium dans les proportions suivantes :

- de 0,1 à 8% en poids de magnésium, pour une teneur en aluminium supérieure ou égale à 0,2% et inférieure à 2% en poids ou
- une teneur supérieure à 5% et inférieure ou égale à 8% en poids de magnésium, pour une teneur en aluminium supérieure ou égale à 2% et inférieure ou égale à 8% en poids,

et comprenant jusqu'à 0,3% en poids d'éléments d'addition, le complément étant du zinc et des impuretés inévitables.

Dans un mode de réalisation préféré, la bande métallique est constituée d'acier.

L'invention a pour objet une pièce métallique obtenue par déformation d'une bande métallique, dont le revêtement présente une ondulation $Wa_{0,8}$ inférieure ou égale à 0,65 $\mu$m. de préférence inférieure ou égale à 0,60 $\mu$m.

L'invention a en outre pour objet une pièce métallique obtenue par déformation d'une bande métallique, ayant en outre subi une opération de skin-pass avant déformation, dont le revêtement présente une ondulation $Wa_{0,8}$ inférieure ou égale à 0,70 $\mu$m, de préférence inférieure ou égale à 0,60$\mu$m, voire à 0,55 $\mu$m.

Les caractéristiques et avantages de la présente invention apparaîtront mieux au cours de la description qui va suivre, donnée à titre d'exemple non limitatif.

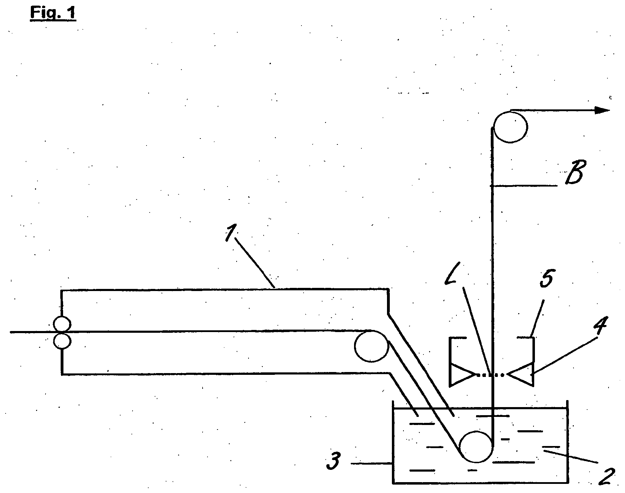

En référence à la figure 1, la première étape du procédé consiste à faire passer en continu une bande métallique B, telle qu'une bande d'acier, dans un bain de revêtement 2 contenant du métal en fusion, contenu dans un creuset 3. Avant d'être plongée dans ce bain 2, la bande subit généralement un recuit dans un four 1 qui permet notamment de préparer la surface.

La vitesse de défilement de la bande sur les lignes industrielles est en général comprise entre 40m/min et 200m/min, par exemple, et est de préférence supérieure à 120 m/min, voire supérieure à 150 m/min.

La composition du bain de revêtement à utiliser dans le procédé est à base de zinc et contient tout d'abord de 0,2% à 8% en poids d'aluminium. Cet élément permet d'une part d'améliorer l'adhérence du revêtement sur la bande métallique et, d'autre part, de protéger la bande contre la corrosion.

En-dessous d'une teneur de 0,2%, on n'observe pas d'effet sur l'adhérence, tandis qu'une teneur supérieure à 8% pose des problèmes de délamination de la peinture appliquée ultérieurement.

Le bain contient également du magnésium afin d'améliorer la résistance à la corrosion du revêtement galvanisé et en particulier sa résistance contre la rouille rouge. Le magnésium est présent dans les proportions suivantes :

- de 0,1 à 8% en poids de magnésium, pour une teneur en aluminium supérieure ou égale à 0,2% et inférieure à 4% en poids ou
- une teneur supérieure à 5% et inférieure ou égale à 8% en poids de magnésium, pour une teneur en aluminium supérieure ou égale à 4% et inférieure ou égale à 8% en poids.

Dans un mode de réalisation préféré, le magnésium est présent dans les proportions suivantes :

- de 0,1 à 8% en poids de magnésium, pour une teneur en aluminium supérieure ou égale à 0,2% et inférieure à 2% en poids ou
- une teneur supérieure à 5% et inférieure ou égale à 8% en poids de magnésium, pour une teneur en aluminium supérieure ou égale à 2% et inférieure ou égale à 8% en poids.

Dans un autre mode de réalisation préféré, le magnésium est présent dans les proportions suivantes :

- de 0,1 à 8% en poids de magnésium, pour une teneur en aluminium supérieure ou égale à 0,2% et inférieure à 1,5% en poids ou
- une teneur supérieure à 5% et inférieure ou égale à 8% en poids de magnésium, pour une teneur en aluminium supérieure ou égale à 1,5% et inférieure ou égale à 8% en poids

Pour obtenir un effet notable sur la résistance à la corrosion, on préfère ajouter au moins 0,1% en poids, voire 0,2% en poids de magnésium. On limite sa teneur maximale dans le bain à 8% en poids car le revêtement obtenu pourrait présenter des problèmes de fissuration sévères lors de la mise en forme ultérieure par emboutissage, notamment. On élimine la zone allant de 0,1 à 5% en poids de magnésium et de 4 à 8% en poids d'aluminium car on a observé la formation de défauts d'aspects visibles à l'oeil nu lorsqu'on soumet la bande au procédé d'essorage confiné dans cette zone de composition.

La composition du bain peut également contenir jusqu'à 0,3% en poids d'éléments optionnels d'addition tels que Si, Sb, Pb, Ti, Ca, Mn, Sn, La, Ce, Cr, Ni, Zr ou Bi. Ces différents éléments peuvent permettre, entre autres, d'améliorer la résistance à la corrosion du revêtement ou bien sa fragilité ou son adhésion, par exemple. L'homme du métier qui connaît leurs effets sur les caractéristiques du revêtement saura les employer en fonction du but complémentaire recherché. On a également vérifié que ces éléments n'interféraient pas avec la maîtrise de l'ondulation obtenue par le procédé. Dans certaines circonstances, on préférera cependant limiter la teneur en titane à moins de 0,01%, voire moins de 0,005% car cet élément peut générer des problèmes de pollution des bains de dégraissage et de phosphatation des constructeurs automobiles.

Enfin le bain peut contenir des impuretés inévitables provenant des lingots d'alimentation du creuset ou bien encore du passage de la bande dans le bain. On pourra ainsi citer notamment, le fer, etc..,

Le bain est maintenu à une température comprise entre le liquidus +10°C et 700°C, la température du liquidus variant en fonction de sa composition. Pour la gamme de revêtements utilisés dans la présente invention, cette température sera donc comprise entre 350 et 700°C. On rappellera que le liquidus est la température au-delà de laquelle un alliage est à l'état entièrement fondu.

Après passage dans le creuset 3, la bande métallique B revêtue sur ses deux faces est ensuite soumise à un essorage au moyen de buses 4 placées de part et d'autre de la bande 8, buses qui projettent un gaz d'essorage, vers la surface de la bande B. Cette opération classique, bien connue de l'homme du métier, permet de régler l'épaisseur du revêtement de façon précise, alors qu'il n'est pas encore solidifié.

Une des caractéristiques essentielles du procédé consiste à choisir un gaz d'essorage présentant un pouvoir oxydant inférieur à celui d'une atmosphère constituée de 4% en volume d'oxygène et 96% en volume d'azote. On pourra notamment utiliser de l'azote ou de l'argon purs ou bien encore des mélanges d'azote ou d'argon et de gaz oxydants tels que, par exemple, l'oxygène, des mélanges de CO et CO2 ou des mélanges de H2 et H2O. On pourra également utiliser des mélanges de CO et CO2 ou des mélanges de H2 et H2O sans ajout de gaz inerte.

A l'issue de l'essorage, l'autre caractéristique essentielle du procédé est le passage dans une zone de confinement délimitée:

- en partie basse par la ligne d'essorage et les faces externes supérieures des buses d'essorage 4,
- en partie haute par la partie supérieure de deux caissons de confinement 5 placés de part et d'autre de la bande, juste au-dessus des buses 4, et présentant une hauteur d'au moins 10 cm par rapport à la ligne d'essorage, et
- sur les côtés, par les parties latérales des caissons de confinement 5, l'atmosphère régnant dans la zone de confinement présentant un pouvoir oxydant inférieur à celui d'une atmosphère constituée de 4% en volume d'oxygène et 96% en volume d'azote et supérieur à celui d'une atmosphère constituée de 0,15% en volume d'oxygène et 99,85% en volume d'azote.

Pour déterminer le pouvoir oxydant de l'atmosphère entourant la bande, on procédera à l'évaluation de sa pression partielle d'oxygène équivalente à l'équilibre.

Lorsque le seul gaz oxydant présent est $O_2$, mélangé avec un gaz inerte (azote, argon), cette pression est alors égale à la teneur volumique en $O_2$ que l'on peut mesurer en temps réel au moyen d'un capteur adapté.

Lorsque d'autres gaz oxydants, tels que $H_2O$ ou $CO_2$ sont présents en mélange avec un gaz réducteur tel que $H_2$ ou CO, par exemple, la pression partielle d'oxygène équivalente se calcule par la loi d'action de masse à la température des gaz considérée.

Par exemple, pour le couple $H_2/H_2O$, la réaction s'écrit comme suit :

$$H_2 + 1/2\ O_2 \leftrightarrow H_2O$$

A l'équilibre thermodynamique, les pressions partielles des gaz obéissent à la relation suivante:

$$\frac{pH_2O}{pH_2 \times \sqrt{pO_2}} = e^{-\frac{\Delta G}{RT}}$$

avec R la constante des gaz parfaits, T la température des gaz en Kelvin, et $\Delta G$ la variation d'énergie libre associée à la réaction, que l'on trouve dans les tables de thermodynamique, en calories par mole ou en Joules par mole selon la valeur prise pour la constante R.

De cette relation, on extrait la valeur de $pO_2$, pression partielle d'oxygène équivalent à l'équilibre pour le mélange gazeux considéré.

Il faut que $pO_2$ soit compris entre 0,0015 et 0,04 dans les caissons de confinement 5.

Les présents inventeurs ont en effet constaté qu'en utilisant un gaz d'essorage tel que défini ci-dessus et en faisant passer la bande dans une telle zone de confinement, on obtenait de façon surprenante un revêtement présentant une ondulation plus réduite que celle des bandes revêtues de l'art antérieur.

Dans le cadre de la présente demande, on entend par ligne d'essorage le segment le plus court reliant la buse et la tôle, correspondant au trajet minimum effectué par le gaz d'essorage, tel que désigné par la lettre L sur la figure 1.

Les caissons de confinement 5 utilisés dans le procédé pourront être alimentés en gaz à faible pouvoir oxydant, voire inerte ou pourront être simplement alimentés par le flux de gaz d'essorage s'échappant des buses.

On limite le pouvoir oxydant du gaz d'essorage et de l'atmosphère de confinement à celui présenté par un mélange constitué de 4% en volume d'oxygène dans 96% en volume d'azote, car au-delà de ce degré d'oxydation, l'ondulation du revêtement n'est pas améliorée par rapport à l'art antérieur.

A contrario, on impose une limite basse pour le pouvoir oxydant de l'atmosphère de confinement, fixée au pouvoir oxydant d'un mélange constitué de 0,15% en volume d'oxygène dans 99,85% en volume d'azote, car si cette atmosphère de confinement n'est pas assez oxydante, son utilisation va favoriser la vaporisation de zinc à partir du revêtement non encore solidifié, vapeurs qui peuvent ensuite venir encrasser le caisson de confinement et/ou se redéposer sur la bande créant ainsi des défauts d'aspects rédhibitoires.

Afin de limiter l'oxydation avant essorage, il peut également être souhaitable, mais non obligatoire, de prolonger les caissons de confinement jusqu'à la surface du bain ou jusqu'à une position intermédiaire entre le bain et la ligne d'essorage, située de préférence à une distance de 10 cm, voire 15 cm, sous la ligne d'essorage. En effet, lorsque la surface de la tôle est exposée à l'air libre, une telle couche se forme systématiquement mais est la plupart du temps éliminée et renvoyée dans le bain de revêtement sous l'impact du jet d'essorage. Un tel confinement permet donc de réduire la quantité d'oxydes du bain qui peuvent être entraînés par la bande pendant son défilement et créer ainsi des défauts rédhibitoires. Il présente cependant l'inconvénient de favoriser la encore la vaporisation de zinc à partir du bain ou à partir du revêtement liquide et on préférera donc que l'atmosphère régnant dans ces caissons de confinement additionnels présente un pouvoir oxydant supérieur à celui d'une atmosphère constituée de 0,15% en volume d'oxygène et 99,85% en volume d'azote.

Bien que toutes sortes de buses d'essorage puissent être utilisées pour la mise en oeuvre du procédé on préférera plus particulièrement choisir des buses dont l'orifice de sortie se présente sous forme de lame dont la largeur dépasse celle de bande à revêtir. Ce type de buse permet en effet de réaliser un bon confinement de la partie basse de la zone d'essorage. On pourra en particulier utiliser de façon avantageuse des buses de section triangulaire comme représenté schématiquement en figure 1. Ces buses se situent généralement à 30 voire 40 cm de la surface du bain.

En respectant ces consignes, on observe en effet une amélioration surprenante et significative de l'ondulation des revêtements en question, comme le montrent les essais présentés plus loin.

Lorsque la tôle revêtue est complètement refroidie, elle peut subir une opération de skin-pass qui permet de lui conférer une texture facilitant sa mise en forme ultérieure. En effet, l'opération du skin-pass permet de transférer à la surface de la tôle une rugosité suffisante pour que sa mise en forme s'effectue dans de bonnes conditions, en favorisant une bonne rétention de l'huile appliquée sur la tôle avant sa mise en forme.

Cette opération de skin-pass est généralement réalisée pour les tôles métalliques destinées à la fabrication de pièces de carrosserie pour véhicules terrestres à moteur. Lorsque les tôles métalliques sont destinées à la fabrication d'appareils électroménagers, par exemple, on ne procède pas à cette opération supplémentaire.

La tôle skin-passée ou non est ensuite mise en forme, par exemple par emboutissage, pliage ou profilage, et de préférence par emboutissage, pour former une pièce que l'on peut ensuite mettre en peinture. Dans le cas des pièces pour l'électroménager, on peut aussi soumettre éventuellement cette couche de peinture à un recuit par des moyens physiques et/ou chimiques, connus en eux-mêmes. A cet effet, on peut faire passer la pièce peinte au travers d'un four à air chaud ou à induction, ou encore sous des lampes UV ou sous un dispositif diffusant des faisceaux d'électrons.

Pour la production de pièces pour l'automobile, on la trempe dans un bain de cataphorèse, et on applique successivement, une couche de peinture d'apprêt, une couche de peinture de base, et éventuellement une couche de vernis de finition.

Avant d'appliquer la couche de cataphorèse sur la pièce, celle-ci est préalablement dégraissée puis phosphatée de manière à assurer l'adhérence de la cataphorèse. La couche de cataphorèse assure à la pièce une protection complémentaire contre la corrosion. La couche de peinture d'apprêt, généralement appliquée au pistolet, prépare l'apparence finale de la pièce et la protège contre le gravillonnage et contre les UV. La couche de peinture de base confère à la pièce sa couleur et son apparence finale. La couche de vernis confère à la surface de la pièce une bonne résistance mécanique, une résistance contre les agents chimiques agressifs et un bon aspect de surface.

La couche de peinture (ou système peinture) mise en oeuvre pour protéger et garantir un aspect de surface optimal aux pièces galvanisées, présente par exemple une couche de cataphorèse de 10 à 20 $\mu$m d'épaisseur, une couche de peinture d'apprêt inférieure à 30 $\mu$m, et une couche de peinture de base inférieure à 40 $\mu$m.

Dans les cas, où le système peinture comprend en outre une couche de vernis, les épaisseurs des différentes couches de peinture sont généralement les suivantes :

- couche de cataphorèse : inférieure à 10 à 20 $\mu$m,
- couche de peinture d'apprêt : inférieure à 20 $\mu$m,
- couche de peinture de base : inférieure à 20 $\mu$m et avantageusement inférieure à 10 $\mu$m, et
- couche de vernis: de préférence inférieure à 30 $\mu$m.

Le système peinture pourra également ne pas comprendre de couche de cataphorèse, et ne comprendre qu'une couche de peinture d'apprêt et une couche de peinture de base et éventuellement une couche de vernis.

**Essais**

On réalise les essais à partir d'une tôle métallique en acier de type IF-Ti laminée à froid, que l'on fait passer dans un creuset contenant un bain métallique à base de zinc comprenant des proportions variables d'aluminium et de magnésium. Il est maintenu à une température de 70°C au-delà du liquidus de la composition.

A la sortie du bain, le revêtement obtenu est essoré à l'azote, au moyen de deux buses classiques de façon à obtenir une épaisseur de revêtement de l'ordre de 7 $\mu$m.

Le trajet de la bande d'acier entre la sortie du bain de revêtement et la zone post essorage est subdivisé en quatre zones:

- une zone 1 allant de la sortie du bain jusqu'à une distance de 10cm sous la ligne d'essorage,
- une zone 2 allant de la fin de la zone 1 jusqu'à la ligne d'essorage,
- une zone 3 allant de la fin de la zone 2 jusqu'à une distance de 10cm au dessus de la ligne d'essorage et
- une zone 4 allant de la fin de la zone 3 jusqu'à la solidification du revêtement métallique.

Au niveau de chacune de ces zones, des caissons de confinement sont mis en place avec des atmosphères variées à base d'azote comprenant une fraction volumique d'oxygène telle qu'indiquée dans le tableau suivant, ou bien constituée d'air. Des capteurs spécifiques permettent de vérifier la teneur en oxygène dans les caissons.

Une fois la tôle revêtue, on prélève trois séries d'échantillons. La première série ne subit pas d'autres modifications, la deuxième série est emboutie selon un mode de déformation équibiaxiale à 3,5% (Marciniak), la troisième série est tout d'abord soumise à une opération de skin-pass avec un taux d'allongement de 1,5%, puis emboutie comme la deuxième.

Au fur et à mesure de l'avancement des essais, on mesure les valeurs d'ondulation $Wa_{0.8}$. Cette mesure consiste à acquérir par palpation mécanique, sans patin, un profil de la tôle d'une longueur de 50 mm, mesuré à 45° de la direction de laminage. On retranche au signal obtenu l'approximation de sa forme générale par un polynôme de degré au moins 5. L'ondulation Wa est alors isolée de la rugosité Ra par un filtre gaussien au seuil de coupure de 0,8mm. Les résultats obtenus sont rassemblés dans le tableau suivant:

| Essai | Composition du revêtement (%) en poids | | | Zone 1 (% vol.) | Zone 2 (% vol.) | Zone 3 (% vol.) | Zone 4 (% vol.) | Ondulation $Wa_{0,8}$ (µm) | | | |
|---|---|---|---|---|---|---|---|---|---|---|---|
| | Zn | Al | Mg | | | | | Sans skin-pass ni déformation | Sans skin-pass et après déformation | Avec skin-pass et avant déformation | Avec skin-pass et après déformation |
| 1 | 98,7 | 0,3 | 1 | Air | Air | 6%$O_2$ | Air | 0,74 | 0,69 | 0,48 | 0,71 |
| 2* | 98,7 | 0,3 | 1 | Air | Air | 3% $O_2$ | Air | 0,64 | 0,57* | 0,45 | 0,63* |
| 3* | 98,7 | 0,3 | 1 | Air | Air | 1% $O_2$ | Air | 0,65 | 0,54* | 0,42 | 0,61* |
| 4 | 98,7 | 0,3 | 1 | 0,1% $O_2$ | 0,1% $O_2$ | 0,1% $O_2$ | Air | ne | ne | ne | ne |
| 5 | 97 | 1,5 | 1,5 | Air | Air | Air | Air | 1,01 | 0,92 | 0,47 | 0,96 |
| 6* | 97 | 1,5 | 1,5 | Air | Air | 3% $O_2$ | Air | 0,62 | 0,55* | 0,41 | 0,47* |
| 7 | 95,5 | 3 | 1,5 | Air | Air | Air | Air | 1,07 | 1 | 0,49 | 1,02 |
| 8 | 95,5 | 3 | 1,5 | Air | Air | 3% $O_2$ | Air | 0,65 | 0,59 | 0,44 | 0,61 |
| 9 | 93,1 | 3,9 | 3 | Air | Air | Air | Air | 1,21 | 1,08 | 0,42 | 0,97 |
| 10 | 93,1 | 3,9 | 3 | Air | 3% $O_2$ | Air | Air | 1,17 | 1,06 | 0,44 | 0,93 |
| 11 | 93,1 | 3,9 | 3 | Air | 3% $O_2$ | 3% $O_2$ | Air | 0,61 | 0,55 | 0,43 | 0,6 |
| 12 | 93,1 | 3,9 | 3 | 3% $O_2$ | 3% $O_2$ | 3% $O_2$ | Air | 0,63 | 0,52 | 0,47 | 0,59 |
| 13 | 93,1 | 3,9 | 3 | Air | Air | 3% $O_2$ | Air | 0,59 | 0,53 | 0,48 | 0,56 |

ne : non évalué, * : selon l'invention

Si on considère l'essai 1, on constate qu'un trop fort pouvoir oxydant ne permet pas d'obtenir un produit dont l'ondulation serait compatible avec la production de pièces de carrosserie.

Les essais 5, 7, 9 et 10 montrent qu'en ne contrôlant pas l'essorage du revêtement, on obtient des valeurs d'ondulation selon l'art antérieur, éloignées de celles pouvant être atteintes selon l'invention.

L'essai 4 n'a pas permis d'évaluation de l'ondulation du revêtement obtenu, en raison de défauts ponctuels d'aspect jugés rédhibitoires pour un produit pour pièces de carrosserie (entraînement de mattes, lignes de jet) :

Enfin, on constate que les essais 2, 3 et 6 permettent bien d'obtenir des niveaux d'ondulation non accessibles auparavant.

**Revendications**

1. Pièce métallique

   obtenue par déformation d'une bande métallique laminée à froid et revêtue par trempé à chaud mais non skin-passée,

   pouvant être obtenue par le procédé de fabrication d'une bande métallique présentant un revêtement métallique de protection contre la corrosion, comprenant les étapes consistant à :

   - faire passer la bande métallique dans un bain de métal en fusion comprenant de 0,2 à 8% en poids d'aluminium et du magnésium dans les proportions suivantes :

      - de 0,1 à 8% en poids de magnésium, pour une teneur en aluminium supérieure ou égale à 0,2% et inférieure à 4% en poids ou
      - une teneur supérieure à 5% et inférieure ou égale à 8% en poids de magnésium, pour une teneur en aluminium supérieure ou égale à 4% et inférieure ou égale à 8% en poids, et comprenant jusqu'à 0,3% en poids d'éléments d'addition, le complément étant du zinc et des impuretés inévitables, puis

   - essorer la bande métallique revêtue au moyen de buses projetant un gaz de part et d'autre de la bande, ledit gaz présentant un pouvoir oxydant inférieur à celui d'une atmosphère constituée de 4% en volume d'oxygène et 96% en volume d'azote, puis
   - à faire passer la bande dans une zone de confinement délimitée :

      - en partie basse par la ligne d'essorage et les faces externes supérieures desdites buses d'essorage,
      - en partie haute par la partie supérieure de deux caissons de confinement placés de part et d'autre de la bande, juste au-dessus desdites buses, et présentant une hauteur d'au moins 10 cm par rapport à la ligne d'essorage, et
      - sur les côtés, par les parties latérales desdits caissons de confinement,

   l'atmosphère régnant dans ladite zone de confinement présentant un pouvoir oxydant inférieur à celui d'une atmosphère constituée de 4% en volume d'oxygène et 96% en volume d'azote et supérieur à celui d'une atmosphère constituée de 0,15% en volume d'oxygène et 99,85% en volume d'azote,

   dont le revêtement métallique présente une ondulation $Wa_{0,8}$ inférieure ou égale à 0,70 $\mu$m et comprend de 0,2 à 8% en poids d'aluminium et du magnésium dans les proportions suivantes :

      - de 0,1 à 8% en poids de magnésium, pour une teneur en aluminium supérieure ou égale à 0,2% et inférieure à 2% en poids ou
      - une teneur supérieure à 5% et inférieure ou égale à 8% en poids de magnésium, pour une teneur en aluminium supérieure ou égale à 2% et inférieure ou égale à 8% en poids,

   et comprenant jusqu'à 0,3% en poids d'éléments d'addition, le complément étant du zinc et des impuretés inévitables,

   dont le revêtement présente une ondulation $Wa_{0,8}$ inférieure ou égale à 0,65 $\mu$m.

2. Pièce métallique

obtenue par déformation d'une bande métallique laminée à froid et revêtue par trempé à chaud mais non skin-passée, pouvant être obtenue par le procédé de fabrication d'une bande métallique présentant un revêtement métallique de protection contre la corrosion, comprenant les étapes consistant à :

- faire passer la bande métallique dans un bain de métal en fusion comprenant de 0,2 à 8% en poids d'aluminium et du magnésium dans les proportions suivantes :

- de 0,1 à 8% en poids de magnésium, pour une teneur en aluminium supérieure ou égale à 0,2% et inférieure à 4% en poids ou
- une teneur supérieure à 5% et inférieure ou égale à 8% en poids de magnésium, pour une teneur en aluminium supérieure ou égale à 4% et inférieure ou égale à 8% en poids, et

comprenant jusqu'à 0,3% en poids d'éléments d'addition, le complément étant du zinc et des impuretés inévitables, puis
- essorer la bande métallique revêtue au moyen de buses projetant un gaz de part et d'autre de la bande, ledit gaz présentant un pouvoir oxydant inférieur à celui d'une atmosphère constituée de 4% en volume d'oxygène et 96% en volume d'azote, puis
- à faire passer la bande dans une zone de confinement délimitée :

 ▪ en partie basse par la ligne d'essorage et les faces externes supérieures desdites buses d'essorage,
 ▪ en partie haute par la partie supérieure de deux caissons de confinement placés de part et d'autre de la bande, juste au-dessus desdites buses, et présentant une hauteur d'au moins 10 cm par rapport à la ligne d'essorage, et
 ▪ sur les côtés, par les parties latérales desdits caissons de confinement,

l'atmosphère régnant dans ladite zone de confinement présentant un pouvoir oxydant inférieur à celui d'une atmosphère constituée de 4% en volume d'oxygène et 96% en volume d'azote et supérieur à celui d'une atmosphère constituée de 0,15% en volume d'oxygène et 99,85% en volume d'azote,

dont le revêtement métallique présente une ondulation $Wa_{0,8}$ inférieure ou égale à 0,70 µm et comprend de 0,2 à 8% en poids d'aluminium et du magnésium dans les proportions suivantes :

- de 0,1 à 8% en poids de magnésium, pour une teneur en aluminium supérieure ou égale à 0,2% et inférieure à 2% en poids ou
- une teneur supérieure à 5% et inférieure ou égale à 8% en poids de magnésium, pour une teneur en aluminium supérieure ou égale à 2% et inférieure ou égale à 8% en poids,

et comprenant jusqu'à 0,3% en poids d'éléments d'addition, le complément étant du zinc et des impuretés inévitables, ayant en outre subi une opération de skin-pass avant déformation et

dont le revêtement présente une ondulation $Wa_{0,8}$ inférieure ou égale à 0,70 µm.

**Patentansprüche**

1. Metallteil,

das durch Verformung eines Metallbands erhalten ist, das kaltgewalzt und heißbadbeschichtet, aber nicht kaltnachgewalzt ist,
das durch das Verfahren zur Herstellung eines Metallbands erhalten werden kann, das eine Metallische Beschichtung zum Schutz gegen Korrosion aufweist, das die Schritte umfasst, die darin bestehen:

- das Metallband ein Schmelzmetallbad durchlaufen zu lassen, das 0,2 bis 8 Gew.-% Aluminium und Magnesium in den folgenden Anteilen enthält:

- 0,1 bis 8 Gew.-% Magnesium für einen Gehalt an Aluminium von über oder gleich 0,2 Gew.-% und unter 4 Gew.-%, oder
- einen Gehalt von über 5 Gew.-% und unter oder gleich 8 Gew.-% Magnesium für einen Gehalt an Aluminium von über oder gleich 4 Gew.-% und unter oder gleich 8 Gew.-%,

und bis zu 0,3 Gew.-% Zusatzelemente enthält, wobei es sich bei dem Rest um Zink und unvermeidbare Verunreinigungen handelt, dann
- abstreifen des beschichteten Metallbands mittels Düsen, die ein Gas beidseits des Bands ausstoßen, wobei das Gas ein Oxidationsvermögen aufweist, das geringer ist als dasjenige einer Atmosphäre, die aus 4 Vol.-% Sauerstoff und 96 Vol.-% Stickstoff besteht, dann
- das Band einen Umschließungsbereich durchlaufen zu lassen, der begrenzt ist durch:

   ◦ im unteren Teil durch die Abstreiflinie und die oberen Außenseiten der Abstreifdüsen,
   ◦ im oberen Teil durch das Oberteil von zwei Umschließungsbehältern, die beidseits des Bands genau über den Düsen angeordnet sind und eine Höhe von mindestens 10 cm in Bezug auf die Abstreiflinie aufweisen, und
   ◦ an den Seiten durch die Seitenteile der Umschließungsbehälter,

wobei die im Umschließungsbereich herrschende Atmosphäre ein Oxidationsvermögen aufweist, das geringer ist als dasjenige einer Atmosphäre, die aus 4 Vol.-% Sauerstoff und 96 Vol.-% Stickstoff besteht, und höher ist als dasjenige einer Atmosphäre, die aus 0,15 Vol.-% Sauerstoff und 99,85 Vol.-% Stickstoff besteht, dessen Metallische Beschichtung eine Welligkeit $Wa_{0,8}$ von unter oder gleich 0,70 $\mu$m aufweist, und das 0,2 bis 8 Gew.-% Aluminium und Magnesium in den folgenden Anteilen enthält:

   - 0,1 bis 8 Gew.-% Magnesium für einen Gehalt an Aluminium von über oder gleich 0,2 Gew.-% und unter 2 Gew.-%, oder
   - einen Gehalt von über 5 Gew.-% und unter oder gleich 8 Gew.-% Magnesium für einen Gehalt an Aluminium von über oder gleich 2 Gew.-% und unter oder gleich 8 Gew.-%,
   und bis zu 0,3 Gew.-% Zusatzelemente enthält, wobei es sich bei dem Rest um Zink und unvermeidbare Verunreinigungen handelt,
   dessen Beschichtung eine Welligkeit $Wa_{0,8}$ von unter oder gleich 0,65 $\mu$m aufweist.

**2.** Metallteil,

das durch Verformung eines Metallbands erhalten ist, das kaltgewalzt und heißbadbeschichtet, aber nicht kaltnachgewalzt ist,
das durch das Verfahren zur Herstellung eines Metallbands erhalten werden kann, das eine Metallische Beschichtung zum Schutz gegen Korrosion aufweist, das die Schritte umfasst, die darin bestehen:

   - das Metallband ein Schmelzmetallbad durchlaufen zu lassen, das 0,2 bis 8 Gew.-% Aluminium und Magnesium in den folgenden Anteilen enthält:

      - 0,1 bis 8 Gew.-% Magnesium für einen Gehalt an Aluminium von über oder gleich 0,2 Gew.-% und unter 4 Gew.-%, oder
      - einen Gehalt von über 5 Gew.-% und unter oder gleich 8 Gew.-% Magnesium für einen Gehalt an Aluminium von über oder gleich 4 Gew.-% und unter oder gleich 8 Gew.-%,

   und bis zu 0,3 Gew.-% Zusatzelemente enthält, wobei es sich bei dem Rest um Zink und unvermeidbare Verunreinigungen handelt, dann
   - abstreifen des beschichteten Metallbands mittels Düsen, die ein Gas beidseits des Bands ausstoßen, wobei das Gas ein Oxidationsvermögen aufweist, das geringer ist als dasjenige einer Atmosphäre, die aus 4 Vol.-% Sauerstoff und 96 Vol.-% Stickstoff besteht, dann
   - das Band einen Umschließungsbereich durchlaufen zu lassen, der begrenzt ist durch:

      ◦ im unteren Teil durch die Abstreiflinie und die oberen Außenseiten der Abstreifdüsen,
      ◦ im oberen Teil durch das Oberteil von zwei Umschließungsbehältern, die beidseits des Bands genau über den Düsen angeordnet sind und eine Höhe von mindestens 10 cm in Bezug auf die Abstreiflinie aufweisen, und
      ◦ an den Seiten durch die Seitenteile der Umschließungsbehälter,

wobei die im Umschließungsbereich herrschende Atmosphäre ein Oxidationsvermögen aufweist, das geringer ist als dasjenige einer Atmosphäre, die aus 4 Vol.-% Sauerstoff und 96 Vol.-% Stickstoff besteht, und höher ist als dasjenige einer Atmosphäre, die aus 0,15 Vol.-% Sauerstoff und 99,85 Vol.-% Stickstoff besteht, dessen Metallische Beschichtung eine Welligkeit $Wa_{0,8}$ von unter oder gleich 0,70 $\mu$m aufweist, und das 0,2 bis 8 Gew.-% Aluminium und Magnesium in den folgenden Anteilen enthält:

- 0,1 bis 8 Gew.-% Magnesium für einen Gehalt an Aluminium von über oder gleich 0,2 Gew.-% und unter 2 Gew.-%, oder
- einen Gehalt von über 5 Gew.-% und unter oder gleich 8 Gew.-% Magnesium für einen Gehalt an Aluminium von über oder gleich 2 Gew.-% und unter oder gleich 8 Gew.-%,

und bis zu 0,3 Gew.-% Zusatzelemente enthält, wobei es sich bei dem Rest um Zink und unvermeidbare Verunreinigungen handelt, das darüber hinaus vor der Verformung einen Kaltnachwalzen Vorgang erfahren hat, und dessen Beschichtung eine Welligkeit $Wa_{0,8}$ von unter oder gleich 0,70 $\mu$m aufweist.

**Claims**

1. Metal part

obtained by deforming a metal strip which has been cold-rolled and coated by hot dipping but not skin-passed,

obtainable by the process for manufacturing a metal strip having a metal coating for corrosion protection, comprising the steps consisting in:

- passing the metal strip through a bath of molten metal comprising 0.2 to 8% by weight of aluminium, and magnesium in the following proportions:

- from 0.1 to 8% by weight of magnesium for an aluminium content greater than or equal to 0.2% and less than 4% by weight or
- a content greater than 5% and less than or equal to 8% by weight of magnesium for an aluminium content greater than or equal to 4% and less than or equal to 8% by weight, and

comprising up to 0.3% by weight of addition elements, the balance being zinc and unavoidable impurities, then
- wiping the coated metal strip by means of nozzles which spray a gas on each side of the strip, said gas having an oxidizing power lower than that of an atmosphere consisting of 4% by volume oxygen and 96% by volume nitrogen, then
- passing the strip into a confinement zone which is delimited:

• in the bottom part by the wiping line and the upper outer faces of said wiping nozzles,
• in the top part by the upper part of two confinement boxes placed on each side of the strip, just above said nozzles, and having a height of at least 10 cm in relation to the wiping line, and
• on the sides by the lateral parts of said confinement boxes,

the atmosphere in said confinement zone having an oxidizing power lower than that of an atmosphere consisting of 4% by volume oxygen and 96% by volume nitrogen and higher than that of an atmosphere consisting of 0.15% by volume oxygen and 99.85% by volume nitrogen,

wherein the metal coating of which strip has a waviness $Wa_{0.8}$ less than or equal to 0.70 $\mu$m and comprises from 0.2 to 8% by weight of aluminium and magnesium in the following proportions:

- from 0.1 to 8% by weight of magnesium for an aluminium content greater than or equal to 0.2% and less than 2% by weight or
- a content greater than 5% and less than or equal to 8% by weight of magnesium for an aluminium content greater than or equal to 2% and less than or equal to 8% by weight,

and comprising up to 0.3% by weight of addition elements, the balance being zinc and unavoidable impurities,

the coating of the strip having a waviness $Wa_{0.8}$ less than or equal to 0.65 $\mu$m.

2. Metal part

obtained by deforming a metal strip which has been cold-rolled and coated by hot dipping but not skin-passed, obtainable by the process for manufacturing a metal strip having a metal coating for corrosion protection, comprising the steps consisting in:

- passing the metal strip through a bath of molten metal comprising 0.2 to 8% by weight of aluminium, and magnesium in the following proportions:

- from 0.1 to 8% by weight of magnesium for an aluminium content greater than or equal to 0.2% and less than 4% by weight or
- a content greater than 5% and less than or equal to 8% by weight of magnesium for an aluminium content greater than or equal to 4% and less than or equal to 8% by weight, and

comprising up to 0.3% by weight of addition elements, the balance being zinc and unavoidable impurities, then
- wiping the coated metal strip by means of nozzles which spray a gas on each side of the strip, said gas having an oxidizing power lower than that of an atmosphere consisting of 4% by volume oxygen and 96% by volume nitrogen, then
- passing the strip into a confinement zone which is delimited:

• in the bottom part by the wiping line and the upper outer faces of said wiping nozzles,
• in the top part by the upper part of two confinement boxes placed on each side of the strip, just above said nozzles, and having a height of at least 10 cm in relation to the wiping line, and
• on the sides by the lateral parts of said confinement boxes,

the atmosphere in said confinement zone having an oxidizing power lower than that of an atmosphere consisting of 4% by volume oxygen and 96% by volume nitrogen and higher than that of an atmosphere consisting of 0.15% by volume oxygen and 99.85% by volume nitrogen,

wherein the metal coating of which strip has a waviness $Wa_{0.8}$ less than or equal to 0.70 $\mu$m and comprises from 0.2 to 8% by weight of aluminium and magnesium in the following proportions:

- from 0.1 to 8% by weight of magnesium for an aluminium content greater than or equal to 0.2% and less than 2% by weight or
- a content greater than 5% and less than or equal to 8% by weight of magnesium for an aluminium content greater than or equal to 2% and less than or equal to 8% by weight,

and comprising up to 0.3% by weight of addition elements, the balance being zinc and unavoidable impurities, having additionally undergone a skin-pass operation prior to deformation, and
the coating of the strip having a waviness $Wa_{0.8}$ less than or equal to 0.70 $\mu$m.

**Fig. 1**